# EUROPEAN PATENT APPLICATION

(11) **EP 1 686 440 A2**
(43) Date of publication of application: **02.08.2006**
(21) Application number: 06250460.0
(22) Date of filing: 27.01.2006
(51) Int. Cl.: G05B 19/406

(54) **Numerical control unit**

(30) Priority: 28.01.2005 JP 2005020874
(71) Applicant: FANUC LTD, Minamitsuru-gun, Yamanashi 401-0597 (JP)
(72) Inventor: Ando, Hiroshige, Minamitsuru-gun, Yamanashi, 401-0310 (JP); Kobayashi, Toru FANUC Dai3virakaramatsu, Minamitsuru-gun Yamanashi 40-0511 (JP); Noda, Hiroshi, Minamitsuru-gun, Yamanashi, 401-0511 (JP)
(74) Representative: Billington, Lawrence Emlyn

(57) **Abstract**

A numerical control unit that facilitates centralized management of alarm information from a variety of elements in a machine tool cabinet. A relay that outputs a malfunction alarm signal, a battery that outputs a low voltage alarm signal, a fan motor that outputs an alarm signal indicating rotation stop or a drop in rpm and a status signal indicating the rpm, and a thermometer or the like that outputs a status signal expressing ambient temperature measurements are installed in a power managing unit in a control unit of the machine tool. Each element is equipped with a wireless communications tag that temporarily stores the alarm signal/status signal and emits a wireless signal. The numerical control unit receives the wireless signal through a receiving device, and displays information about the cause (originating location) of the alarm and activates a buzzer (or a speaker) when an alarm occurs. Status information is displayed continuously.

## Description

### BACKGROUND OF THE INVENTION

### 1. Field of the Invention

The present invention relates to a numerical control unit for a machine tool, and more particularly, to a numerical control unit that enables centralized management of alarm information from a variety of elements in a machine tool cabinet.

### 2. Description of Related Art

As is well known, a variety of elements (also called "components"), such as a relay, a fan motor, a battery and the like, are installed in a machine tool cabinet. If a malfunction occurs in the machine tool cabinet, it is desirable to be able to centrally manage the alarm information relating to the elements in order to identify the malfunctioning element (component) promptly.
However, there is no concept of centralizing management of element alarm information within the actual cabinet. In reality, such management of element alarm information is dispersed throughout the cabinet, and there is not found any publication that discloses an invention that centrally manages alarm information of the various elements. Conventionally, a method is known of obtaining individual element alarm information. However, any attempt to implement centralized management of most element alarm information by expansion of this technique necessitates coupling all the elements by wire, which complicates the internal wiring of the cabinet and increases the cost of the equipment, making centralized management difficult to implement.

### SUMMARY OF THE INVENTION

The present invention provides a numerical control unit capable of low-cost, energy-efficient, centralized management of various elements (various components) in a machine tool cabinet, thereby facilitating identification of the location of a malfunction and thus reducing down time.

The numerical control unit of the present invention is connected to a power managing unit having a plurality of elements that output alarm information and/or status information. The numerical control unit comprises: wireless (IC) tags respectively connected to the plurality of elements of the power managing unit, for storing and transmitting the alarm information and/or the status information of the plurality of elements; receiving means for receiving the information transmitted from the wireless tags; and managing means connected to the receiving means, for managing the status of the power managing unit based on the information received by the receiving means.

The plurality of elements of the power managing unit may include at least one of a relay, a battery, a fan motor and a sensor.

The numerical control unit may further comprise display means for displaying the status of the power managing unit.

In the present invention, alarm information and status information relating to the elements is transmitted to a numerical controller wirelessly through wireless communications tags (wireless tags), thus enabling centralized management of the elements in the cabinet to be carried out in an energy-efficient manner at the numerical controller. In addition, the present invention obviates the need for complicated wiring inside the cabinet, thus providing a cost advantage as well.

### BRIEF DESCRIPTION OF THE DRAWINGS

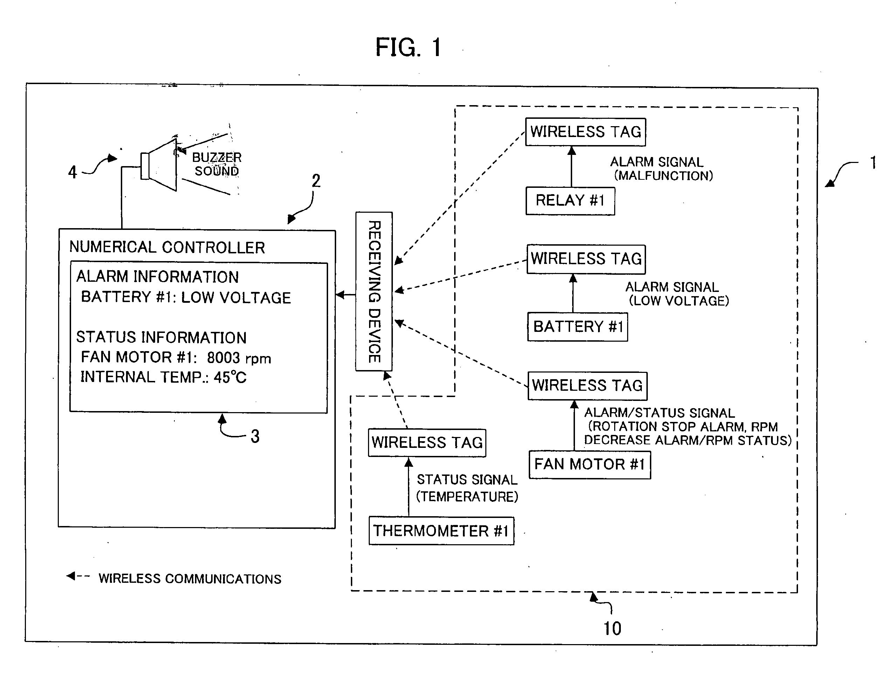

FIG. 1 is a diagram illustrating an embodiment of the present invention.

### DETAILED DESCRIPTION

FIG. 1 is a diagram illustrating an embodiment of the present invention, showing the main parts inside a control cabinet of a machine tool. The machine tool may perform any machining process, such as cutting, punching, or the like. The entire control cabinet is indicated by reference numeral 1. A numerical controller 2 and a power managing unit 10 are contained in the control cabinet 1, and both are electrically connected in a manner that is well known. A relay that outputs a malfunction detection alarm signal, a battery that outputs a low voltage alarm signal, a fan motor that outputs an alarm signal indicating that rotation has stopped or that there is a drop in rpm as well as a status signal indicating the rpm, and a thermometer that measures ambient temperature and outputs a status signal expressing ambient temperature measurements are installed in a dispersed way in the power managing unit 10. It should be noted that the thermometer is but one example of a sensor element, and in some cases other sensors , such as a vibration sensor, a smoke sensor, or the like, may be disposed within the power managing unit 10 in addition to the thermometer or in place of the thermometer.

In most cases, a plurality of each of these elements is provided, although in FIG. 1 only one of each such plurality of elements is shown. In an actual arrangement, for example a case in which five relays, two batteries, four fan motors and one thermometer are used, the elements are disposed in the required numbers at the required locations, as in relay #1, relay #2, relay #3, relay #4, relay #5, battery #1, battery #2, fan motor #1, fan motor #2, fan motor #3, fan motor #4 and thermometer #1.

It should be noted that the relay, battery, fan motor, thermometer and other elements that output alarm signals and/or status signals are themselves well known, and therefore a description of the structures of each of these elements is omitted here.

The above-described elements, that is, the relay, the battery, the fan motor and the thermometer, are each equipped with a wireless (IC) tag. The wireless tag itself is a well-known device, provided with a memory capability and a wireless signal transmission capability. Each wireless tag temporarily stores the alarm signal and/or status signal that the element (that is, the relay, battery, fan motor or thermometer) corresponding to such tag outputs, as well as converts the stored signals into wireless signals at predetermined intervals.

The transmitted wireless signal is received by a receiving device connected to the numerical controller 2 and read by the numerical controller 2. In addition to the usual control (that is, controlling axial movement of the machine tool based on a processing program), the numerical controller 2 also has the capability to centrally manage the alarm information and the status information of the various elements. In other words, the alarm signals and the status signals of the various elements received by the numerical controller 2 through the receiving device are continuously stored in an internal memory by software processing, and all or a portion of these signals are displayed on an display device 3 (such as a liquid crystal display panel).

Although a variety of forms of display are possible for the contents of the display, information on the cause of the alarm (that is, the location of the alarm) is always displayed when an alarm occurs. Preferably, the status information is displayed simultaneously on a single screen or by repeated switching between successive screens. In FIG. 1, as an example of a display, a state in which "low voltage alarm at battery #1" alarm information and "fan motor #1 rpm 8003 rpm, cabinet internal temperature 45°C" status information are displayed is shown. The status information is held for 3 seconds, for example, after which it switches to a display of, for example, "fan motor #2 rpm 7855 rpm, cabinet internal temperature 46°C".

In addition, a buzzer (or a speaker) 4 is attached to the numerical controller 2, which reports the occurrence of an alarm by an audio alarm (the sound of a buzzer) when an alarm signal is received. In the state shown in the display example shown in FIG. 1, as a matter of course the alarm (the buzzer) sounds, enabling an operator to be aware of the alarm even if the operator is far from the numerical controller 2. Display of the alarm information on the display unit 3 may be carried out as a red color display, a flashing display or the like.

Thus, as described above, the operator is made aware of the occurrence of an alarm by the sound of a buzzer (or visually by the flashing display of the screen), and at that time can determine the cause of the alarm from that which is displayed and take appropriate action. In the case shown in the example described above, the operator knows that there is a low voltage alarm for battery #1 and can take appropriate measure, such as turning off the equipment power supply, replacing the battery #1 and so forth.

Similarly, when an alarm occurs at the relay or the fan motor, the buzzer (or speaker) 4 sounds and the cause of the alarm is displayed on the display unit 3.

## Claims

1. A numerical control unit connected to a power managing unit having a plurality of elements that output alarm information and/or status information, said numerical control unit comprising:
wireless tags respectively connected to the plurality of elements of the power managing unit, for storing and transmitting the alarm information and/or the status information of the plurality of elements;
receiving means for receiving the information transmitted from said wireless tags; and
managing means connected to said receiving means, for managing the status of the power managing unit based on the information received by said receiving means.

2. A numerical control unit according to claim 1, wherein the plurality of elements of the power managing unit includes at least one of a relay, a battery, a fan motor and a sensor.

3. A numerical control unit according to claim 1, further comprising display means for displaying the status of the power managing unit.
